# EUROPEAN PATENT SPECIFICATION

(11) **EP 1 959 173 B1**
(45) Date of publication and mention of the grant of the patent: **07.11.2012**
(21) Application number: 06832994.5
(22) Date of filing: 21.11.2006
(51) Int. Cl.: F16J 15/32, F16F 9/32

(54) **SEALING DEVICE**
DICHTUNGSVORRICHTUNG
DISPOSITIF D'ETANCHEITE

(30) Priority: 08.12.2005 JP 2005354235
(43) Date of publication of application: 20.08.2008
(73) Proprietor: NOK CORPORATION, Tokyo 105-8585 (JP)
(72) Inventor: OTANI, Takeo, Fukushima-shi, Fukushima 960-1102 (JP)
(74) Representative: TBK
(86) International application number: PCT/JP2006/323144
(87) International publication number: WO 2007/066504

(56) References cited:
- JP-A- 10 082 467
- JP-A- 10 122 378
- JP-A- 11 132 338
- JP-A- 2003 106 462
- JP-A- 2003 294 154
- JP-A- 2005 090 569
- JP-A- 2005 273 692

## Description

### BACKGROUND OF THE INVENTION

### Field of the Invention

The present invention relates to a sealing device used in a hydraulic shock absorber or the like in a suspension of a motor vehicle.

### Description of the Conventional Art

Abasic performance required in the hydraulic shock absorber of the motor vehicle is to generate a suitable damping force for stabilizing a vehicle body with respect to a vibration or an impact input during a traveling. However, in recent years, a demand for improving a steering stability and a ride quality becomes stronger, and a suitable damping force in a small amplitude region is required in the hydraulic shock absorber. In connection with this, a high-pressure sealed type hydraulic shock absorber is used.

In the sealing apparatus used in the high-pressure sealed type hydraulic shock absorber, it is necessary to improve pressure resistance of an oil seal lip, and such the necessity is achieved by changing a material and a shape. However, since there is a risk that higher temperature and higher pressure than expected are applied to an oil seal lip under some traveling condition, it is desirable to improve pressure resistance by supporting a back surface of the oil seal lip by a backup ring, in the sealing device used under the condition mentioned above.

However, in the case of the sealing device to which the backup ring is not installed, since an oil seal and a dust seal can be integrally provided on one metal ring, the sealing device is constituted of a single part. On the other hand, in the case of the sealing device to which the backup ring is installed, since the oil seal and the dust seal are separated by interposing of the backup ring, the sealing device is constituted of three parts including the oil seal, the backup ring and the dust seal. Accordingly, it is required to previously integrate the oil seal, the backup ring and the dust seal in accordance with a fitting process or the like, in order to prevent a handling work such as storage and an assembling work from becoming complicated (for example, refer to the following patent document 1).

Patent Document 1: Japanese Unexamined Patent Publication No. 2005-90569

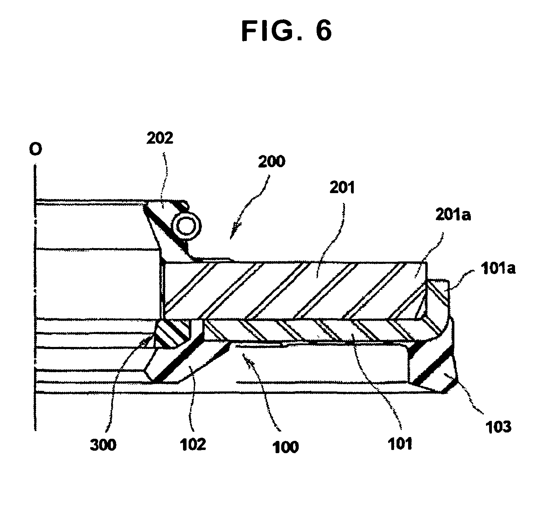

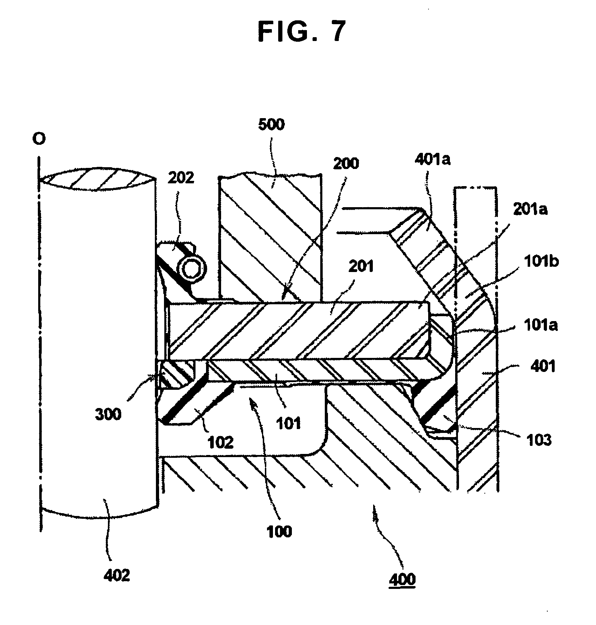

Fig. 6 is a half cross sectional view showing a conventional sealing device made by integrating an oil seal, a backup ring and a dust seal in accordance with a fitting process, by cutting it along a plane passing through an axis O, Fig. 7 is a half cross sectional view showing a provisionally caulked state at a time of incorporating the sealing device in Fig. 6 to a hydraulic shock absorber, by cutting it along a plane passing through an axis O.

In particular, the conventional sealing device shown in Fig. 6 is constituted of an oil seal 100 obtained by integrally forming a main lip 102 at an inner circumferential side and an outer circumferential lip 103 at an outer circumferential side on a first metal ring 101 by a rubber-like elastic material, a dust seal 200 obtained by integrally forming a dust lip 202 on an inner circumference of a second metal ring 201 in which an outer circumferential end 201a is fitted to an outer circumferential tubular section 101a of the first metal ring 101, by a rubber-like elastic material, and a backup ring 300 formed by a synthetic resin material such as a PTFE or the like and fitted between a back surface of the main lip 102 of the oil seal 100 and the second metal ring 201 of the dust seal 200.

The sealing device is installed to a hydraulic shock absorber 400 shown in Fig. 7 by first incorporating the sealing device between an end portion inner circumference of a cylinder 401 and a rod 402 in a hydraulic shock absorber 400 such that the oil seal 100 is directed to an inner side, by using a jig 500, provisionally caulking an end portion 401a of the cylinder 401 to an inner circumferential side in a tapered shape, and further bending the end portion 401a so as to form an approximately vertical flat surface with respect to an axis O, thereby fully caulking it so as to press the outer side surface 201a of the second metal ring 201 in the dust seal 200.

However, in a state in which the end portion 401a of the cylinder 401 is provisionally caulked to the inner circumferential side in the tapered shape as shown in Fig. 7, the outer circumferential tubular section 101a of the first metal ring 101 in the oil seal 100 is directly fixed to a bent portion 401b of the cylinder 401, however, the second metal ring 201 in the dust seal 200 is not directly fixed to the bent portion 401b of the cylinder 401. Further, since a load of the provisional caulking applied from the cylinder 401 to the outer circumferential tubular section 101a of the first metal ring 101 generates a load in such a direction as to make the second metal ring 201 in the dust seal 200 get out of the inner circumference of the outer circumferential tubular section 101a, there is a case that the dust seal 200 is detached from the oil seal 100 so as to become loose when the jig 50 for incorporating the sealing device to the cylinder 401 is detached. Accordingly, there is a case that it is impossible to make the full caulking and it is impossible to assemble.

Document JP 2005 273692 A discloses a sealing device according to the preamble of claim 1. This sealing device has a first metal ring and a second metal ring. The second metal ring has an end portion as a tip. The tip of the second metal ring has a slope at the front part thereof.

### SUMMARY OF THE INVENTION

### Problem to be Solved by the Invention

The present invention is made by taking the point mentioned above into consideration, and a technical object of the present invention is to provide a sealing device including an oil seal, a dust seal and a backup ring prepared as independent members from each other, in which the members can be securely incorporated to a device in a state that each of the members is firmly fixed to each other during an installation process to the device. This object is solved by a sealing device of claim 1.

### Means for Solving the Problem

In accordance with claim 1 of the present invention, there is provided a sealing device comprising:
an oil seal in which a main lip is integrally provided on an inner circumference of a first metal ring fixed by caulking to an inner circumference of an outer circumferential member;
a dust seal in which a dust lip is integrally provided on an inner circumference of a second metal ring having an outer circumferential end fitted to an outer circumferential tubular section of the first metal ring; and
a backup ring fitted to a back surface of the main lip,
wherein a slope having a larger diameter at an atmosphere side in an installed state, is formed at an inner circumference of a tip of the outer circumferential tubular section of the first metal ring, and the slope is caulked together with a to-be-caulked end section of the outer circumferential member so that the slope is fitted to the outer circumferential end of the second metal ring.

### Effect of the Invention

In accordance with the sealing device on the basis of claim 1 of the present invention, since the slope formed at the inner circumference of the tip of the outer circumferential tubular section of the first metal ring in the oil seal is fitted to the outer circumferential end of the second metal ring in the dust seal on the basis of the caulking of the outer circumferential member, whereby the oil seal and the dust seal are firmly fixed to each other, it is possible to prevent defective incorporating from being caused.

### Brief Description of Drawings

Fig. 1 is a half cross sectional view in an installed state, showing an unclaimed example of a sealing device helpful for understanding the present invention by cutting it along a plane passing through an axis O;

Fig. 2 is a half cross sectional view in a non-installed state, showing the sealing device in Fig. 1 by cutting it along the plane passing through the axis O;

Fig. 3 is a half cross sectional view showing a provisionally caulked state at a time of incorporating the sealing device in Fig. 1 to a hydraulic shock absorber by cutting it along the plane passing through the axis O;

Fig. 4 is a half cross sectional view in a non-installed state, showing an embodiment of the sealing device in accordance with the present invention by cutting it along the plane passing through the axis O;

Fig. 5 is a half cross sectional view showing a provisionally caulked state at a time of incorporating the sealing device in Fig. 4 to a hydraulic shock absorber by cutting it along the plane passing through the axis O;

Fig. 6 is a half cross sectional view showing a conventional sealing device by cutting it along the plane passing through the axis O; and

Fig. 7 is a half cross sectional view showing a provisionally caulked state at a time of incorporating the sealing device in Fig. 6 to a hydraulic shock absorber by cutting it along the plane passing through the axis O;

### Description of Reference Numerals

- 1: sealing device
- 10: oil seal
- 11: first metal ring
- 11a: disc portion
- 11b: outer circumferential tubular section
- 11c: tip
- 11d: slope
- 12: main lip
- 13: outer circumferential lip
- 20: dust seal
- 21: second metal ring
- 21a: outer circumferential end
- 21b: slope
- 22: dust lip
- 23: extension spring
- 30: backup ring
- 2: rod
- 3: cylinder (outer circumferential member)
- 3a: caulking portion
- 3b: to-be-caulked end section
- 4: rod guide
- A: inside space
- B: atmosphere

### DETAILED DESCRIPTION OF PREFERRED EMBODIMENT

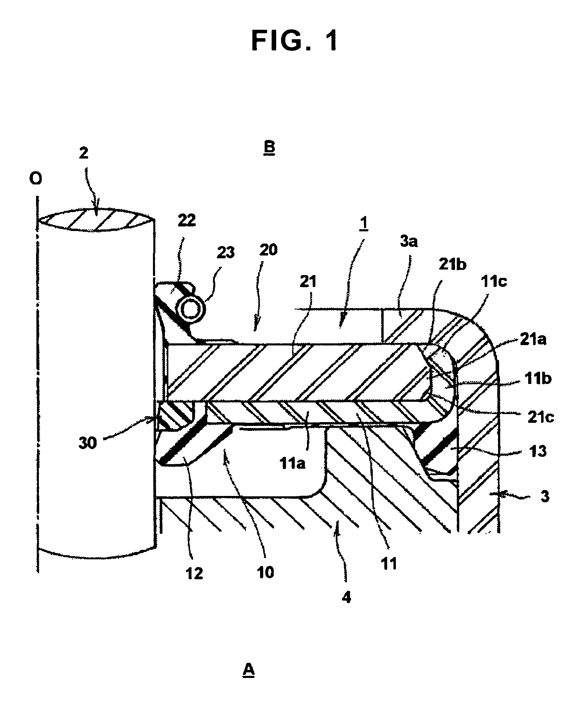

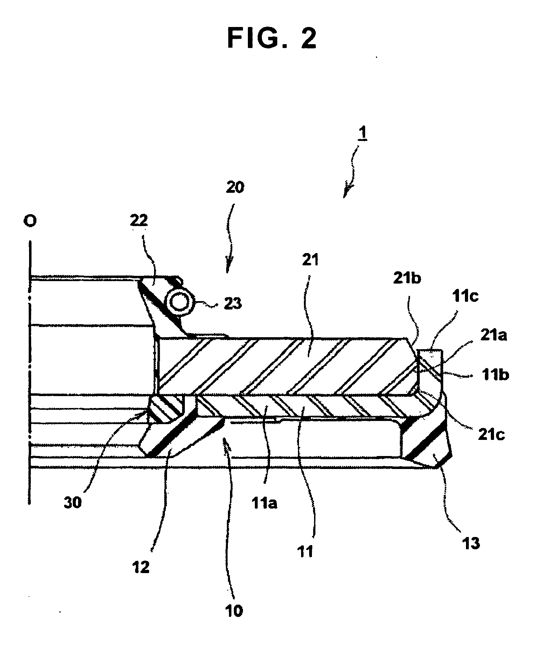

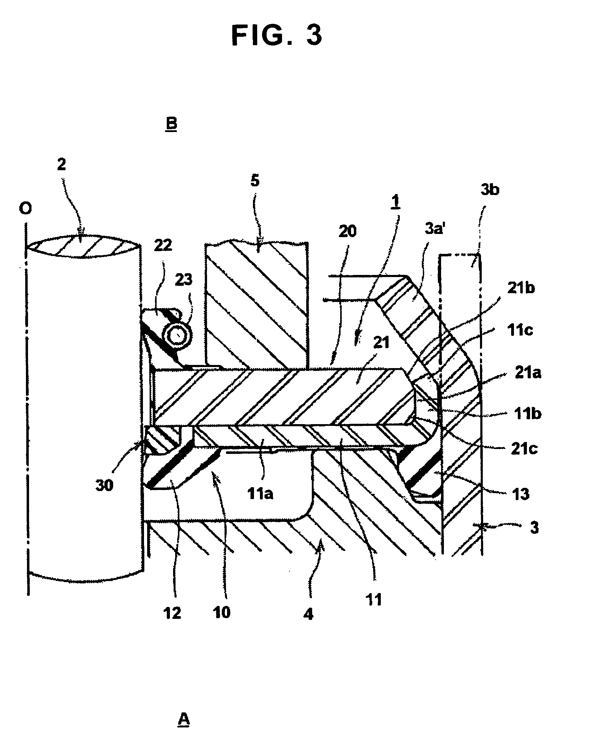

A description will be given below of a preferable embodiment of a sealing device in accordance with the present invention with reference to the accompanying drawings. First, Fig. 1 is a half cross sectional view in an installed state, showing an unclaimed example of a sealing device helpful for understanding the present invention by cutting it along a plane passing through an axis O, Fig. 2 is a half cross sectional view in a non-installed state showing the sealing device in Fig. 1 by cutting it along the plane passing through the axis O, and Fig. 3 is a half cross sectional view showing a provisionally caulked state at a time of incorporating the sealing device in Fig. 1 to a hydraulic shock absorber by cutting it along the plane passing through the axis O.

In Fig. 1, reference numeral 2 denotes a rod of a hydraulic shock absorber, reference numeral 3 denotes a cylinder arranged in such a manner as to surround an outer circumference of the rod 2, and reference numeral 4 denotes a rod guide fixed to an inner circumference of the cylinder 3. Further, reference symbol A denotes an inside space to be sealed in an inner portion of the hydraulic shock absorber, and reference symbol B denotes an atmosphere outside the hydraulic shock absorber.

The sealing device 1 in accordance with the first embodiment of the present invention is positioned at an outer side of the rod guide 4 so as to be interposed between the rod 2 and an end portion of the cylinder 3, and is provided with an oil seal 10, a dust seal 20 arranged at an atmosphere B side thereof, and a backup ring 30 arranged between both the seals 10 and 20. In this case, the cylinder 3 corresponds to an outer circumferential member described in claim 1 or claim 2 of the present invention.

The oil seal 10 is constituted of a first metal ring 11, and a main lip 12 and an outer circumferential lip 13 which are integrally provided on the first metal ring 11 and are directed to the inside space A side. The dust seal 20 is constituted of a second metal ring 21 which is arranged so as to lap over the first metal ring 11 of the oil seal 10, a dust lip 22 integrally provided on the second metal ring 21 and directed to the atmosphere B side, and an extension spring 23 compensating tension force of the dust lip 22, and is held between a caulking portion 3a at an open end of the cylinder 3 and the rod guide 4 at an inner side thereof, in a state in which the first metal ring 11 of the oil seal 10 and the second metal ring 21 of the dust seal 20 lap over each other.

The first metal ring 11 of the oil seal 10 is formed by punching press of a metal plate in such a manner that a shape obtained by cutting it along a plane passing through an axis (an illustrated cross sectional shape) is made into an approximately L-shape. In other words, the first metal ring 11 is constituted of a disc portion 11a, and an outer circumferential tubular section 11b extending from an outer circumferential end thereof. The main lip 12 and the outer circumferential lip 13 are formed by vulcanization with a rubber-like elastic material, and is integrally bonded by vulcanization to the first metal ring 11. Among them, the main lip 12 extends so as to become smaller in diameter gradually from a base portion which is bonded by vulcanization to an inner circumferential end of the disc portion 11a of the first metal ring 11 toward the inside space A side, and is slidably brought into close contact with the outer circumferential surface of the rod 2, thereby sealing working fluid within the inside space A. Further, the outer circumferential lip 13 extends from a base portion which is bonded by vulcanization to a bent portion between the disc portion 11a and the outer circumferential tubular section 11b of the first metal ring 11 toward the inside space A side, and is interposed in a compressed state between the inner surface of the cylinder 3 and the outer circumferential portion of the rod guide 4, thereby sealing the working fluid within the inside space A.

The second metal ring 21 of the dust seal 20 is manufactured by punching a thicker metal plate than the first metal ring 11 of the oil seal 10 in a donut shape, and is lapped over an opposite side surface to the main lip 12 and the outer circumferential lip 13 of the disc portion 11a of the first metal ring 11 of the oil seal 10, and an outer circumferential end 21a thereof is pressure-inserted and fitted to an inner circumference of the outer circumferential tubular section 11b of the first metal ring 11. Further, the dust lip 22 is formed by vulcanization with a rubber-like elastic material, extends toward an opposite side to the oil seal 10 from a base portion which is integrally bonded by vulcanization to an inner circumferential portion of the second metal ring 21, and is slidably brought into close contact with the outer circumferential surface of the rod 2, thereby preventing intrusion of dusts, muddy water or the like in the atmosphere B.

A slope 21b which becomes smaller in diameter toward the atmosphere B side is formed on an outer circumferential surface at the atmosphere B side, of the outer circumferential end 21a of the second metal ring 21 in the dust seal 20, and a chamfer 21c is formed on an edge at the oil seal 10 side. Further, a tip 11c of the outer circumferential tubular section 11b of the first metal ring 11 fitted to the outer circumferential end 21a of the second metal ring 21 is caulked to an inner circumferential side in an installed state in Fig. 1, and is fitted to the slope 21b.

The backup ring 30 has a suitable rigidity which is necessary for backing up the main lip 12 of the oil seal 10, is formed with a synthetic resin material such as a polytetrafluoroethylene (PTFE) or the like which is excellent in an abrasion resistance and has a low friction coefficient, is fitted between a back surface of the main lip 12 of the oil seal 10 and an inner circumferential portion of the second metal ring 21 of the dust seal 20, backs up the main lip 12 from the atmosphere B side and the inner circumferential side, and prevents the main lip 12 from being excessively deformed by hydraulic pressure of the inside space A.

In the sealing device 1 having the structure mentioned above, the oil seal 10, the dust seal 20 and the backup ring 30 are provisionally assembled with each other by interposing the backup ring 30 between the back surface of the main lip 12 of the oil seal 10 and the second metal ring 21 of the dust seal 20, and pressure-inserting the outer circumferential end 21a of the second metal ring 21 of the dust seal 20 to the inner circumference of the outer circumferential tubular section 11b in the first metal ring 11 of the oil seal 10, as shown in Fig. 2, in a state in which the sealing device 1 is not yet installed to the hydraulic shock absorber in Fig. 1. It is possible to prevent handling at a time of storing and feeding and an incorporating work from being complicated, by such provisional assembling as mentioned above.

In this case, at this time point, since the outer circumferential tubular section 11b of the first metal ring 11 is formed in a cylindrical shape wholly to the tip 11c, and the chamfer 21c is formed at the edge of the oil seal 10 side of the second metal ring 21, as shown in Fig. 2, it is possible to easily pressure-insert the second metal ring 21 to the inner circumference of the outer circumferential tubular section 11b of the first metal ring 11.

Further, at a time of installing the provisionally assembled sealing device 1 as mentioned above to the hydraulic shock absorber, the sealing device 1 is inserted to a position at an outer side of the rod guide 4 between the rod 2 and the end portion of the cylinder 3, by using the jig 5 such that the oil seal 10 comes to the inside space A side, as shown in Fig. 3. A to-be-caulked end section 3b, which becomes a caulking portion 3a, of the cylinder 3 shown in the aforementioned Fig. 1 is formed in a cylindrical shape as shown by a two-dot chain line in Fig. 3, and protrudes to the atmosphere B side than the sealing device 1 at a length which is necessary for forming the caulking portion 3a.

Next, the to-be-caulked end section 3b of the cylinder 3 is provisionally caulked. In particular, since it is hard to bend the cylindrical to-be-caulked end section 3b vertically to an inner circumferential side in accordance with one caulking step, and form the collar-shaped caulking portion 3a as shown in Fig. 1, a conical tubular shaped provisional caulking portion 3a' is first formed by bending through the provisional caulking. In this provisional caulking, an inner surface of the to-be-caulked end section 3b of the cylinder 3 interferes with an outer circumferential edge of the tip 11c of the outer circumferential tubular section 11b in the first metal ring 11 in a process of being bent to an inner circumferential side, and presses the outer circumferential edge to the inner circumferential side. Accordingly, the tip 11c being apart from the slope 21b of the second metal ring 21 as shown in Fig. 2 is caulked by a load of the provisional caulking, and the inner circumferential surface thereof is fitted to the slope 21b formed at the outer circumferential end 21a of the second metal ring 21.

Accordingly, since the oil seal 10 is prevented from coming off on the basis of the pressure contact between the tip 11c of the outer circumferential tubular section 11b in the first metal ring 11 and the provisional caulking portion 3a' of the cylinder 3, and the dust seal 20 is prevented from coming off on the basis of the fitting between the slope 21b formed on the second metal ring 21 and the tip 11c of the outer circumferential tubular section 11b in the first metal ring 11, it is possible to prevent the second metal ring 21 from coming off from the first metal ring 11 and prevent the dust seal 20 from becoming loose, even after the jig 5 is detached.

Further, the caulking portion 3a pressing the second metal ring 21 of the dust seal 20 is formed as shown in the aforementioned Fig. 1, by making the final caulking step after the provisional caulking, and further bending the conical tubular provisional caulking portion 3a' of the cylinder 3 so as to form a plane which is approximately orthogonal to the axis O. Accordingly, the installing work of the sealing device 1 is finished.

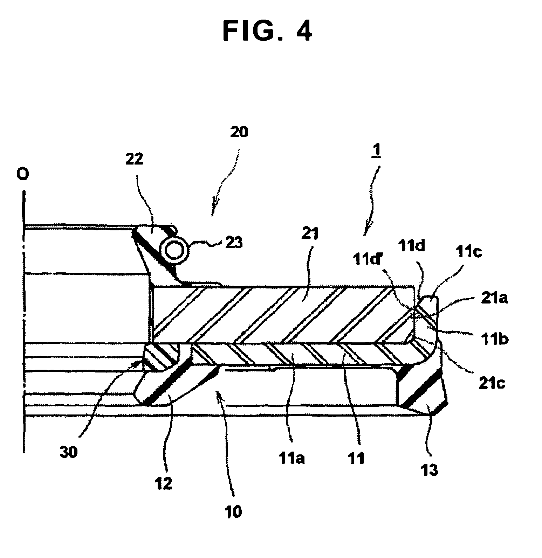

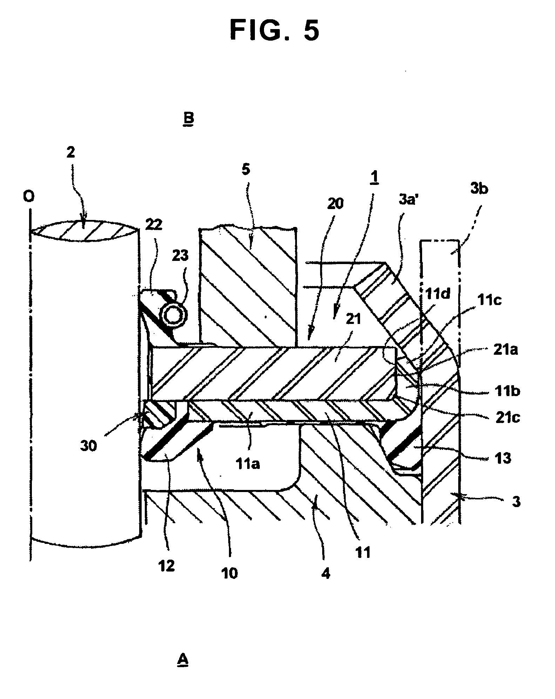

Next, Fig. 4 is a half cross sectional view in a non-installed state, showing an embodiment of the sealing device in accordance with the present invention by cutting it along the plane passing through the axis O, and Fig. 5 is a half cross sectional view showing a provisionally caulked state at a time of incorporating the sealing device in Fig. 4 to a hydraulic shock absorber by cutting it along the plane passing through the axis O.

The embodiment is different from the example described previously in a point that a slope 11d having a larger diameter at the atmosphere B side is formed on the inner circumferential surface of the tip 11c of the outer circumferential tubular section 11b in the first metal ring 11 of the oil seal 10, and the outer circumferential surface at the atmosphere B side of the outer circumferential end 21a of the second metal ring 21 in the dust seal 20 is formed in a cylindrical surface shape, as shown in Fig. 4. The slope 11d is set in such a size that the tip 11c can be bent to the inner circumferential side together with the to-be-caulked end section 3b by provisionally caulking the to-be-caulked end section 3b of the cylinder 3 as shown in Fig. 5.

The structures of the other portions are basically the same as in the above example.

The sealing device 1 in accordance with the embodiment is also structured such that, in the non-installed state to the hydraulic shock absorber, the backup ring 30 is interposed between the back surface of the main lip 12 of the oil seal 10 and the second metal ring 21 of the dust seal 20, and the oil seal 10, the dust seal 20 and the backup ring 30 are provisionally assembled with each other by pressure-inserting the outer circumferential end 21a of the second metal ring 21 of the dust seal 20 to the inner circumference of the outer circumferential tubular section 11b of the first metal ring 11 in the oil seal 10, as shown in Fig. 4. It is possible to prevent handling at a time of storing and feeding and an incorporating work from being complicated, by such provisional assembling as mentioned above.

Further, at a time of installing the provisionally assembled sealing device 1 as mentioned above to the hydraulic shock absorber, the sealing device 1 is inserted to a position at an outer side of the rod guide 4 between the rod 2 and the end portion of the cylinder 3, by using the jig 5 such that the oil seal 10 comes to the inside space A side, as shown in Fig. 5. The to-be-caulked end section 3b of the cylinder 3 is formed in a cylindrical shape as shown by a two-dot chain line in Fig. 5, and protrudes to the atmosphere B side than the sealing device 1 at a length which is necessary for forming the caulking portion 3a.

Next, a conical tubular provisional caulking portion 3a' is formed by bending in accordance with the provisional caulking of the to-be-caulked end section 3b of the cylinder 3. In this provisional caulking, an inner surface of the to-be-caulked end section 3b of the cylinder 3 interferes with an outer circumferential edge of the tip 11c of the outer circumferential tubular section 11b in the first metal ring 11 in a process of being bent to an inner circumferential side, and presses the outer circumferential edge to the inner circumferential side. Accordingly, the tip 11c being apart from the outer circumferential end 21a of the second metal ring 21 by the slope 11d is caulked by a load of the provisional caulking around a small-diameter end portion 11d' of the slope 11d, and the slope 11d is fitted to the outer circumferential surface of the outer circumferential end 21a of the second metal ring 21.

At this time, since the tip 11c of the outer circumferential tubular section 11b in the first metal ring 11 is caulked, moment is generated in a contact portion between the small-diameter end portion 11d' of the slope 11d and the outer circumferential end 21a of the second metal ring 21 of the dust seal 20. Since this moment is applied to the outer circumferential end 21a in such a direction as to prevent coming off thereof, it is possible to prevent the second metal ring 21 from coming off from the first metal ring 11 and prevent the dust seal 20 from becoming loose, even after the jig 5 is detached.

The caulking portion 3a pressing the second metal ring 21 of the dust seal 20 is formed as shown in the aforementioned Fig. 1, by making a final caulking step after the provisional caulking, and further bending the conical tubular provisional caulking portion 3a' of the cylinder 3 so as to form a plane which is approximately orthogonal to the axis O, and thus the installing work of the sealing device 1 is finished.

### Industrial Applicability

The present invention can provide a sealing device in which defective incorporating to a device such as a hydraulic shock absorber or the like in a suspension of a motor vehicle is prevented from being caused.

## Claims

1. A sealing device comprising:
an oil seal (10) in which a main lip (12) is integrally provided on an inner circumference of a first metal ring (11) fixed by caulking to an inner circumference of an outer circumferential member (3);
a dust seal (20) in which a dust lip (22) is integrally provided on an inner circumference of a second metal ring (21) having an outer circumferential end (21a) fitted to an outer circumferential tubular section (11b) of said first metal ring (11); and
a backup ring (30) fitted to a back surface of said main lip (12),
wherein a slope (11d) having a larger diameter at an atmosphere (B) side in an installed state, is formed at an inner circumference of a tip (11c) of the outer circumferential tubular section (11b) of said first metal ring (11),
**characterized in that**
said tip (11c) is caulked together with a to-be-caulked end section (3b) of said outer circumferential member (3) so that the slope (11d is fitted to the outer circumferential end (21a) of said second metal ring (21).

## Patentansprüche

1. Abdichtvorrichtung mit:
einer Öldichtung (10), in der eine Hauptlippe (12) an einem Innenumfang eines ersten Metallrings (11) einstückig vorgesehen ist, der durch Verstemmen an einem Innenumfang eines Außenumfangselementes (3) befestigt ist;
einer Staubdichtung (20), in der eine Staublippe (22) an einem Innenumfang eines zweiten Metallrings (21) einstückig vorgesehen ist, der ein Außenumfangsende (21a) hat, das an einem Außenumfangsrohrabschnitt (11b des ersten Metallrings (11) sitzt; und
einem Sicherungsring (30), der an einer Rückseitenfläche der Hauptlippe (12) sitzt,
wobei eine Abschrägung (11d mit einem größeren Durchmesser an der Seite der Umgebung (B) in einem eingebauten Zustand und an einem Innenumfang eines Endstücks (11c) des Außenumfangsrohrabschnittes (11b) des ersten Metallrings (11) ausgebildet ist,
**dadurch gekennzeichnet, dass**
das Endstück (11c) zusammen mit einem zu verstemmenden Endabschnitt (3b) des Außenumfangselementes (3) so verstemmt ist, dass die Abschrägung (11d) am dem Außenumfangsende (21a) des zweiten Metallrings (21) sitzt.

## Revendications

1. Dispositif d'étanchéité comprenant :
une bague d'étanchéité d'huile (10) où une lèvre principale (12) est prévue d'un seul tenant sur une circonférence interne d'un premier anneau métallique (11) fixé par matage à une circonférence interne d'un élément circonférentiel externe (3) ;
un pare-poussière (20) dans lequel une lèvre anti-poussière (22) est prévue d'un seul tenant sur une circonférence interne d'un deuxième anneau métallique (21) ayant une extrémité circonférentielle externe (21a) ajustée à une section tubulaire circonférentielle externe (11b) dudit premier anneau métallique (11) ; et
une bague d'appui (30) ajustée à une surface arrière de ladite lèvre principale (12),
dans lequel une pente (11d) ayant un diamètre plus grand au côté atmosphère (B) dans un état installé, est formée au niveau d'une circonférence interne d'une pointe (11c) de la section tubulaire circonférentielle externe (11b) dudit premier anneau métallique (11),
**caractérisé en ce que**
ladite pointe (11c) est matée conjointement avec une section d'extrémité à mater (3b) dudit élément circonférentiel externe (3) de sorte que la pente (11d) soit ajustée à l'extrémité circonférentielle externe (21a) dudit deuxième anneau métallique (21).
